# EUROPÄISCHE PATENTSCHRIFT

(11) **EP 3 724 013 B1**
(45) Veröffentlichungstag und Bekanntmachung des Hinweises auf die Patenterteilung: **30.06.2021**
(21) Anmeldenummer: 18773377.9
(22) Anmeldetag: 13.09.2018
(51) Int. Cl.: B60G 17/052

(54) **DRUCKLUFTVERSORGUNGSANLAGE ZUM BETREIBEN EINER PNEUMATIKANLAGE, VERFAHREN UND FAHRZEUG**
COMPRESSED AIR SUPPLY SYSTEM FOR OPERATING A PNEUMATIC SYSTEM, METHOD AND VEHICLE
DISPOSITIF D'ALIMENTATION EN AIR COMPRIMÉ POUR FAIRE FONCTIONNER UN SYSTÈME PNEUMATIQUE, PROCÉDÉ ET VÉHICULE

(30) Priorität: 13.12.2017 DE 102017011527
(43) Veröffentlichungstag der Anmeldung: 21.10.2020
(73) Patentinhaber: ZF CV Systems Hannover GmbH, 30453 Hannover (DE)
(72) Erfinder: MEIER, Jörg, 31840 Hessisch Oldendorf (DE)
(74) Vertreter: Rabe, Dirk-Heinrich
(86) Internationale Anmeldenummer: PCT/EP2018/074681
(87) Internationale Veröffentlichungsnummer: WO 2019/115033

(56) Entgegenhaltungen:
- EP-A1- 3 219 522
- DE-A1- 10 301 119
- DE-A1-102012 001 736
- DE-A1-102012 006 382
- DE-A1-102012 024 757

## Beschreibung

Die Erfindung betrifft eine Druckluftversorgungsanlage, zum Betreiben einer Pneumatikanlage in einem pneumatischen System eines Fahrzeugs, aufweisend: eine Druckluftzuführung; einen Druckluftanschluss zur Pneumatikanlage; einen Entlüftungsanschluss zur Umgebung; eine pneumatische Hauptleitung zwischen der Druckluftzuführung und dem Druckluftanschluss, die einen Lufttrockner aufweist; ein auf der pneumatischen Hauptleitung angeordnetes, als Vorsteuerventil ausgebildetes Entlüftungsventil, mit einem Vorsteueranschluss, einen mindestens eine Verdichterstufe aufweisenden Verdichter, zusätzlich zur pneumatischen Hauptleitung, ein Vorsteuerventil und einen pneumatischen Vorsteuerkanal, der das Vorsteuerventil mit dem Vorsteueranschluss des Entlüftungsventils pneumatisch verbindet. Die Erfindung betrifft auch ein entsprechendes Fahrzeug und Verfahren.

Druckluftversorgungsanlagen mit vorgesteuerten Entlüftungsventilen sind allgemein bekannt. Dieser grundsätzlich vorteilhafte Ansatz zeichnet sich dadurch aus, dass relativ geringe Kräfte zum Stellen des Entlüftungsventils benötigt werden, und somit die Betätigungskräfte des Vorsteuerventils geringer ausfallen können.

DE 103 01 119 A1 offenbart ein Luftfederungssystem mit einer Ventileinrichtung, die ein pneumatisch betätigbares Entlüftungsventil aufweist, das mit der Druckluft des Luftfederungssystems über ein elektromagnetisch betätigbares Steuerventil vorsteuerbar ist und über das die Luftfederbälge und/oder der Druckluftspeicher mit der Atmosphäre verbindbar sind.

Ein derartiges Konzept ist jedoch noch verbesserungswürdig, insbesondere hinsichtlich der Möglichkeit einer Entlüftung auf einen niedrigeren Druck, insbesondere einer Entlüftung auf praktisch 0 bar. Auch ist ein derartiges Konzept noch verbesserungswürdig hinsichtlich der Entlüftung von initial niedrigen Drücken.

DE 10 2012 001 736 A1, die den Oberbegriff des Anspruchs 1 zeigt, beschreibt eine Druckluftversorgungsanlage, bei der vorgesehen ist, dass an die Steuerleitung eine druckhaltende pneumatische Einrichtung angeschlossen ist, die ausgebildet ist, den Vorsteueranschluss bei geöffnetem Entlüftungs-Ventilanschluss des Entlüftungsventils in der Entlüftungsleitung unter Steuerdruck zu halten, unabhängig von einem Druck in der Entlüftungsleitung und/ oder der pneumatischen Hauptleitung.

WO 01/56820 A1 beschreibt ein Luftfedersystem für ein Kraftfahrzeug mit einer Kompressoreinheit, einer Speichereinheit sowie Schaltventilen, über die die einzelnen Luftfedern der einzelnen Fahrzeugräder mit Druckluft versorgt werden, wobei im Bereich zwischen der Kompressoreinheit und den Schaltventilen eine in der Atmosphäre mündende, durch ein Sperrventil absperrbare oder freischaltbare Entlüftungsleitung vorgesehen ist.

DE 39 19 438 A1 beschreibt eine druckmittelbetätigbare Einrichtung mit einem zwischen einer Druckmittelquelle und Verbrauchern befindlichen Lufttrockner. Bedingt durch die Beschaffenheit des Lufttrockners erfolgt dabei die Entfeuchtung im sogenannten Regenerationsbetrieb nur mit entspannter Luft, d. h. mit einem Druck, der wesentlich niedriger ist, als der, der beim Entleeren von den Verbrauchern abgeführten Luft. Das Entspannen der Luft erfolgt mit Hilfe einer Drosselstelle, die in der Leitungsverbindung von den Verbrauchern zum Lufttrockner während des Entleerens der Verbraucher wirksam ist. Die Einrichtung soll ermöglichen, dass der beim Entleeren des Verbrauchers erfolgende Regel- bzw. Betätigungsvorgang im Wesentlichen unbeeinflusst von der Drosselstelle und mit einer erhöhten Regel- bzw. Betätigungsgeschwindigkeit erfolgen kann.

Derartige Konzepte sind trotz vorteilhafter druckhaltender pneumatischer Einrichtungen, weiter verbesserungswürdig, insbesondere hinsichtlich ihrer Kompaktheit und einer einfachen Konstruktion. Auch sind derartige Konzepte insbesondere noch verbesserungswürdig hinsichtlich der Entlüftung von initial niedrigen Drücken. Selbst bei hinreichend hohen Drücken benötigen insbesondere beide letztgenannten Konzepte einen hinreichend hohen Staudruck vor der Trocknerdrossel, um ein sicheres Öffnen des Relaiskolbens zu gewährleisten. Das erfordert große Nennweiten der vorgeschalteten Pneumatikperipherie.

An dieser Stelle setzt die Erfindung an, deren Aufgabe es ist, in verbesserter Weise eine Druckluftversorgungsanlage anzugeben. Insbesondere soll hinsichtlich des Bereitstellens eines Drucks zum Betätigen eines Entlüftungsventils die Abhängigkeit von einem Druck in einem pneumatischen System, insbesondere einer Hauptleitung, vorteilhaft verringert werden.

Die Aufgabe, betreffend die Druckluftversorgungsanlage, wird durch die Erfindung mit einer Druckluftversorgungsanlage des Anspruchs 1 gelöst. Die Erfindung geht aus von einer Druckluftversorgungsanlage, zum Betreiben einer Pneumatikanlage in einem pneumatischen System eines Fahrzeugs, aufweisend: eine Druckluftzuführung; einen Druckluftanschluss zur Pneumatikanlage; einen Entlüftungsanschluss zur Umgebung; eine pneumatische Hauptleitung zwischen der Druckluftzuführung und dem Druckluftanschluss, die einen Lufttrockner aufweist; ein auf der pneumatischen Hauptleitung angeordnetes, als Vorsteuerventil ausgebildetes Entlüftungsventil, mit einem Vorsteueranschluss, einen mindestens eine Verdichterstufe aufweisenden Verdichter, zusätzlich zur pneumatischen Hauptleitung, ein Vorsteuerventil und einen pneumatischen Vorsteuerkanal, der das Vorsteuerventil mit dem Vorsteueranschluss des Entlüftungsventils pneumatisch verbindet.

Erfindungsgemäß ist bei der Druckluftversorgungsanlage vorgesehen, dass an den Vorsteueranschluss eine druckhaltende pneumatische Ventileinrichtung angeschlossen ist, die ausgebildet ist, einen Steuerdruck für den Vorsteueranschluss bereitzustellen, insbesondere unabhängig von einem Druck in der pneumatischen Hauptleitung während eines Entlüftens des pneumatischen Systems, und die druckhaltende pneumatische Ventileinrichtung über eine Zuführleitung pneumatisch mit einem Druckspeicher verbindbar ist, die druckhaltende pneumatische Ventileinrichtung ein Auswahlventil aufweist zum selbstständigen Verbinden des Vorsteueranschlusses in einer ersten Betriebsstellung mit der Zuführleitung und in einer zweiten Betriebsstellung mit der Hauptleitung derart, dass die Leitung, in welcher der relativ höhere Druck herrscht, mit dem Vorsteueranschluss verbunden wird und die Leitung, in welcher der relativ niedrigere Druck herrscht, zum Vorsteueranschluss gesperrt wird.

Des Weiteren wird die Aufgabe durch ein Verfahren des Anspruchs 9 und ein Fahrzeug des Anspruchs 10 gelöst.

Ein als pneumatisches Vorsteuerventil ausgebildetes Entlüftungsventil hat, z. B. gegenüber einem Magnetventil, allgemein den Vorteil, dass es ein Schalten großer Nennweiten von unter relativ hohen Drücken stehenden Luftströmen ermöglicht, insbesondere ohne wie bei einem Magnetventil hohe Ströme zu benötigen.

Die Erfindung geht von der Überlegung aus, dass eine druckhaltende pneumatische Ventileinrichtung grundsätzlich vorteilhaft ist, da durch sie beim Vorsteuern des Entlüftungsventils eine Abhängigkeit von einem Druck in der Hauptleitung vorteilhaft verringert wird. Eine druckhaltende pneumatische Ventileinrichtung ermöglicht auf diese Weise eine Entlüftung auch bei niedrigen Balgdrücken. Ferner ist es möglich, das pneumatische System, insbesondere die Pneumatikanlage, auf relativ niedrige Drücke, insbesondere auf einen Druck von praktisch 0 bar, zu entlüften.

Auch bei initial niedrigen Drücken, wie sie z. B. in den Hinterachsfedern vorliegen können, wird durch eine druckhaltende pneumatische Ventileinrichtung eine Entlüftung ermöglicht.

Die Erfindung hat erkannt, dass es - insbesondere für die Zuverlässigkeit und den Funktionsbereich eines vorgesteuerten Entlüftungsventils - vorteilhaft ist, zum Betätigen des Entlüftungsventils mehr als eine Druckluftquelle bereitzustellen, um insbesondere die Abhängigkeit von nur einer einzelnen Druckluftquelle vorteilhaft zu verringern. Durch eine derartige verringerte Abhängigkeit ist es beispielsweise möglich, auch bei nahezu oder vollständig entleerten Federbälgen - und somit einem für die Betätigung unzureichenden Druck in der Hauptleitung - eine ausreichende Menge an ausreichend verdichteter Druckluft zum Vorsteuern des Entlüftungsventils - insbesondere über einen Druckspeicher - bereitzustellen. Hierbei ist es insbesondere vorteilhaft, wenn stets die Druckquelle mit dem Vorsteueranschluss verbunden wird, die über den Druck verfügt, insbesondere über einen zum Betätigen des Entlüftungsventils ausreichenden Druck verfügt. Insbesondere ist es vorteilhaft, wenn die Auswahl der Druckquelle selbstständig, insbesondere automatisch und/oder in gesteuerter und/oder geregelter Weise, erfolgt. Insbesondere wird somit vorteilhaft sichergestellt, dass stets ausreichend Druck, oder zumindest der höhere Druck, zum Ansteuern des Entlüftungsventils zur Verfügung steht. Durch die Möglichkeit der Auswahl einer geeigneten, insbesondere über einen höheren Druck verfügenden, Druckquelle - und insbesondere die Auswahl eines Druckspeichers als Druckquelle zum Betätigen des Entlüftungsventils - kann vorteilhaft eine in der Entlüftungsleitung angeordnete Regenerationsdrossel mit einem relativ großen Durchmesser vorgesehen werden, um eine möglichst rasche Entlüftung, unter Berücksichtigung einer möglichst effektiven Regeneration des Lufttrockners nach dem Prinzip der Druckwechseladsorption, zu ermöglichen. Eine effektive Entlüftung wird insbesondere dadurch erreicht, dass die zur Vorsteuerung verwendete Druckluft nunmehr aus der druckhaltenden pneumatischen Einrichtung, insbesondere einem Vorsteuer-Druckspeicher, entnommen wird. Durch das Bereitstellen des Steuerdrucks für das Entlüftungsventil durch die druckhaltende pneumatische Ventileinrichtung muss die Trocknerdrossel nicht mehr auf einen hinreichenden Staudruck ausgelegt werden. Somit müssen vorteilhaft bei der Drosselauslegung insbesondere nur noch die Regenerationsgüte und die Absenkgeschwindigkeit berücksichtigt werden. Dies führt weiterhin zu dem Vorteil, dass wenn die der Trocknerdrossel vorgeschaltete Peripherie mit relativ geringen Strömungsdurchmessern ausgelegt ist - und demnach bei geöffnetem Ablasspfad kein Staudruck vor der Trocknerdrossel entstehen kann -das Relaisventil sicher und vollständig geöffnet bleiben kann.

Im Rahmen der Erfindung stellen die Begriffe "Auswahlventil" und "Wechselventil" keine Beschränkung auf ein einziges physikalisches Ventil dar, und können genauso im Sinne einer "Auswahlventilanordnung" und "Wechselventilanordnung" verstanden werden. Ein Auswahlventil lässt sich beispielsweise mit zwei gesonderten Rückschlagventilen, von denen eines eine zusätzliche Feder aufweist, darstellen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorteilhaft ist vorgesehen, dass die Zuführleitung zum Aufladen des Verdichters pneumatisch mit dem Verdichter verbindbar ist. Dies kann konkret beinhalten, dass eine Zuführleitung, die insbesondere primär zum Aufladen eines Verdichters vorhanden ist und verwendet wird, ebenfalls dazu eingesetzt wird, Druckluft zum Vorsteueranschluss des Entlüftungsventils zu leiten. Hierzu ist es bereits vorteilhaft, wenn nur ein Teil der Strecke zwischen Druckspeicher und Entlüftungsventil über die Zuführleitung erschlossen wird. An geeigneter Stelle, beispielsweise vor einem Aufladeventil, kann dann eine Steuerleitung abgezweigt werden, die die Zuführleitung mit dem Vorsteueranschluss des Entlüftungsventils pneumatisch verbindet. Dies ist insbesondere vorteilhaft, wenn eine derartige Zuführleitung, insbesondere zwischen Druckspeicher und Verdichter (oder einer anderen in der Nähe des Entlüftungsventils angeordneten Komponente), bereits vorhanden ist. Eine derartige Zuführleitung kann beispielsweise für das Aufladen des Verdichters, einer so genannten Boostfunktion, genutzt werden. In diesem Fall kann die vorhandene Luftleitung, teilweise oder vollständig für die druckhaltende pneumatische Ventileinrichtung zusätzlich genutzt werden. Das Vorsteuern eines Entlüftungsventils mittels einer bereits vorhandenen Leitung, insbesondere einer bereits vorhandenen Zuführleitung oder Aufladeleitung, ist vorteilhaft, weil auf diese Weise für die Vorsteuerung keine zusätzliche Leitung benötigt wird und somit Bauraum und Komponenten eingespart werden. Durch die Verwendung bereits vorhandener Leitungen wird die Komplexität der Anlage somit relativ einfach gehalten.

Vorteilhaft ist vorgesehen, dass die Auswahlventilanordnung als Wechselventil ausgebildet ist. Dies beinhaltet konkret, dass das Aufladeventil zwei Eingänge aufweist und einen Ausgang, wobei die beiden Eingänge jeweils einen Ventilkörper aufweisen, der im Sinne eines Rückschlagventils in das Ventil einströmende Luft passieren lässt, umgekehrt jedoch Luft nicht in entgegengesetzter Richtung aus dem Ventil ausströmen lässt. Durch diese Anordnung ergibt sich, dass der Eingang, an dem der höheren Druck anliegt, von der einströmenden Luft geöffnet wird, und diese einströmende Luft gleichzeitig den Ventilkörper des anderen Eingangs, an dem ein geringerer Druck herrscht, in Sperrstellung drückt. Auf diese Weise kann die einströmende, unter einem höheren Druck stehende Luft das Wechselventil zum Ausgang passieren, und der Eingang, an dem der geringere Druck anliegt, wird gesperrt. Somit erfolgt, insbesondere zu Beaufschlagung des Vorsteueranschlusses des Entlüftungsventils, automatisch eine Auswahl desjenigen Anschlusses, an dem der jeweils höhere Druck herrscht. Bei Druckgleichheit, also gleich hohen Drücken am ersten Eingang und am zweiten Eingang des Auswahlventils, sind insbesondere beide Eingänge geöffnet. Durch die Rückschlagventil-Eigenschaft beider Eingänge des Auswahlventils wird erreicht, dass Druckluft, welche einmal einen Eingang passiert hat, über keinen der beiden Eingänge mehr zurückströmen kann und somit am Ausgang des Auswahlventils gehalten wird. Durch ein Halten der Druckluft am Ausgang und insbesondere in dem zweiten Teil der Steuerleitung zwischen dem Ausgang des Auswahlventils und dem geschlossenen ersten Vorsteuerventil-Anschluss kann insbesondere vorteilhaft eine Speicherwirkung des zweiten Teils der Steuerleitung erreicht werden. Durch die Rückschlagventil-Eigenschaft beider Eingänge des Auswahlventils wird der jeweils höchste an einem der beiden Eingänge anliegende Luftdruck in dem zweiten Teil der Steuerleitung gehalten, bis das Vorsteuerventil geöffnet wird, um das Entlüftungsventil zu betätigen.

Vorteilhaft ist vorgesehen, dass das Auswahlventil eine, insbesondere einstellbare, Vorzugsstellung aufweist derart, dass ein bei gleichen Drücken am ersten Eingang und am zweiten Eingang des Auswahlventil der Eingang an der Vorzugstellung mit dem Ausgang des Auswahlventils verbunden wird, und insbesondere der andere Eingang gesperrt wird. Dies bedeutet insbesondere, dass ein -bevorzugter - Eingang des Ausgangsventil geöffnet und insbesondere der andere - nicht bevorzugte - Eingang gesperrt wird, obwohl der an dem nicht bevorzugten Eingang herrschende Druck gleich oder sogar größer ist. Durch eine solche Vorzugsstellung kann eine Druckquelle bevorzugt, das heißt insbesondere bei -relativ zur anderen Druckquelle - niedrigeren Drücken, mit dem Vorsteueranschluss des Entlüftungsventils verbunden werden.

Insbesondere ist vorgesehen, dass das Auswahlventil eine Feder zum Vorgeben einer Vorzugsstellung aufweist. Durch eine Feder kann insbesondere vorteilhaft eine Federkraft zum definierten Beaufschlagen eines Ventilkörpers eingestellt werden. Durch eine definierte Federkraft kann eine relative Druckdifferenz zwischen dem ersten Eingang (A1) und dem zweiten Eingang (A2) eingestellt werden, ab welcher der eine Eingang bevorzugte Eingang schließt und der nicht bevorzugte Eingang öffnet. Eine derartige Druckdifferenz beschreibt also, um welchen Betrag das Öffnungsverhalten des Auswahlventils aufgrund der Vorzugstellung von einem normalen Öffnungsverhalten, das heißt einem Öffnen beider Eingänge bei Druckgleichheit, verschoben ist.

Im Rahmen einer bevorzugten Weiterbildung ist vorgesehen, dass der Verdichter eine erste, Niederdruck-Verdichterstufe und eine zweite, Hochdruck-Verdichterstufe aufweist. Dies beinhaltet konkret, dass eine Niederdruckstufe und eine Hochdruckstufe des Verdichters Luft nacheinander auf unterschiedlich hohe Druckniveaus verdichten. Auf diese Weise kann die Motorleistung optimal zum Erreichen eines vordefinierten Druckniveaus eingesetzt werden. Insbesondere ist vorgesehen, dass die Zuführleitung über eine Aufladeleitung zum Aufladen des Verdichters pneumatisch mit dem Verdichter, insbesondere dem Eingang der Hochdruck-Verdichterstufe, verbindbar ist. Insbesondere kann über eine Zwischenleitung, die die Niederdruckstufe und die Hochdruckstufe pneumatisch verbindet, zusätzlich Luft, insbesondere bereits vorverdichtete und in einem Druckspeicher gespeicherte Luft, zwecks Aufladung zum Eingang der Hochdruckstufe geleitet werden. Durch diese, auch als Boostfunktion bezeichnete Funktion kann die Verdichtungsleistung des Verdichters, mindestens kurzzeitig, erhöht werden.

Vorteilhaft ist vorgesehen, dass die druckhaltende pneumatische Ventileinrichtung vollständig oder teilweise in die Druckluftversorgungsanlage integriert ist, insbesondere eine bauliche Einheit mit dieser bildet. Dies bedeutet konkret, dass die druckhaltende pneumatische Ventileinrichtung in die - im Wesentlichen eine bauliche Einheit bildende - Druckluftversorgung integriert ist. Hierbei kann die Druckluftversorgung als eine geschlossene bauliche Einheit gebildet sein oder als ein baukastenartiges System aus Modulen, welche zur Konfiguration einer Druckluftversorgung zusammengebaut werden und wobei die druckhaltende pneumatische Ventileinrichtung ein Modul oder den Teil eines Moduls bildet. Insbesondere kann die Druckluftversorgungsanlage dabei neben der druckhaltenden pneumatischen Ventileinrichtung die Verdichteranordnung, die pneumatische Hauptleitung, das Entlüftungsventil, den Lufttrockner und die Entlüftungsleitung aufweisen.

Durch die Integration der druckhaltenden pneumatischen Ventileinrichtung können Vorteile insbesondere hinsichtlich einer Verringerung des benötigten Bauraums, Gewichtseinsparungen und Kosteneffizienz der Bauteile erreicht werden.

Die Erfindung führt zur Lösung der Aufgabe auch auf ein Verfahren zum Betreiben einer Druckluftversorgungsanlage gemäß dem Konzept der Erfindung, wobei die Druckluftversorgungsanlage zum Betreiben einer Pneumatikanlage in einem pneumatischen System eines Fahrzeugs eingesetzt wird und eine druckhaltende pneumatische Ventileinrichtung aufweist, aufweisend die Schritte: Verdichten von Druckluft, Versorgen des pneumatischen Systems, insbesondere der Pneumatikanlage und/oder eines Druckspeichers und/oder einer Galerie mit Druckluft, Betreiben der Pneumatikanlage, Entlüften des pneumatischen Systems über ein als Vorsteuerventil ausgebildetes Entlüftungsventil, mit einem Vorsteueranschluss, wobei eine an den Vorsteueranschluss angeschlossene druckhaltende pneumatische Ventileinrichtung den Vorsteueranschluss unter Steuerdruck hält, insbesondere unabhängig von einem Druck in der pneumatischen Hauptleitung während eines Entlüftens des pneumatischen Systems, die druckhaltende pneumatische Ventileinrichtung über eine Zuführleitung pneumatisch mit einem Druckspeicher verbindbar ist, die druckhaltende pneumatische Ventileinrichtung über ein Auswahlventil den Vorsteueranschluss selbstständig mit der Zuführleitung oder der Hauptleitung verbindet derart, dass die Leitung, in welcher der relativ höhere Druck herrscht, mit dem Vorsteueranschluss verbunden wird und insbesondere die Leitung, in welcher der relativ niedrigere Druck herrscht, zum Vorsteueranschluss gesperrt wird.

Beim erfindungsgemäßen Verfahren zum Betreiben einer Druckluftversorgunganlage werden die Vorteile der Druckluftversorgunganlage vorteilhaft genutzt. Insbesondere die Entlüftung mittels eines als Vorsteuerventil ausgebildeten Entlüftungsventils ermöglicht vorteilhaft, die Entlüftung unabhängig von einem Druck in der Hauptleitung vorzunehmen, da die Vorsteuerung des Entlüftungsventils mit separat gespeicherter Druckluft erfolgt. So kann eine Entlüftung zum Beispiel unabhängig von einem in den Federbälgen der Pneumatikanlage herrschenden Druck erfolgen.

Die Erfindung führt zur Lösung der Aufgabe auch auf ein Fahrzeug mit einer Druckluftversorgungsanlage gemäß dem Konzept der Erfindung. Das Konzept der Erfindung wird in dem Fahrzeug vorteilhaft genutzt, insbesondere ermöglicht eine druckhaltende pneumatische Ventileinrichtung gemäß dem Konzept der Erfindung - neben den bereits genannten Vorteilen - eine schnellere mögliche Absenkgeschwindigkeit der Luftfedern.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: ein pneumatisches System mit einer druckhaltenden pneumatischen Ventileinrichtung in einer weiteren bevorzugten Weiterbildung mit einem Auswahlventil, wobei Druckluft zur Beaufschlagung des Vorsteueranschluss des Entlüftungsventils über eine Zuführleitung geleitet wird,
- Fig. 2: ein pneumatisches System mit einer druckhaltenden pneumatischen Ventileinrichtung in einer weiteren bevorzugten Weiterbildung mit einem Auswahlventil, wobei die Zuführleitung praktisch ausschließlich zur Beaufschlagung des Vorsteueranschluss des Entlüftungsventils eingesetzt wird,
- Fig. 3: ein pneumatisches System mit einer druckhaltenden pneumatischen Ventileinrichtung in einer weiteren bevorzugten Weiterbildung mit einem Auswahlventil, wobei die Beaufschlagung des Vorsteueranschluss des Entlüftungsventils mit Druckluft über ein Vorsteuerschaltventil selektiv schaltbar ist,
- Fig. 4A, 4B: eine Schnittdarstellung eines Entlüftungsventils jeweils in einer Förderstellung und in einer Entlüftungsstellung, und
- Fig. 5: eine stark vereinfachte Darstellung eines Fahrzeugs mit einem pneumatischen System.

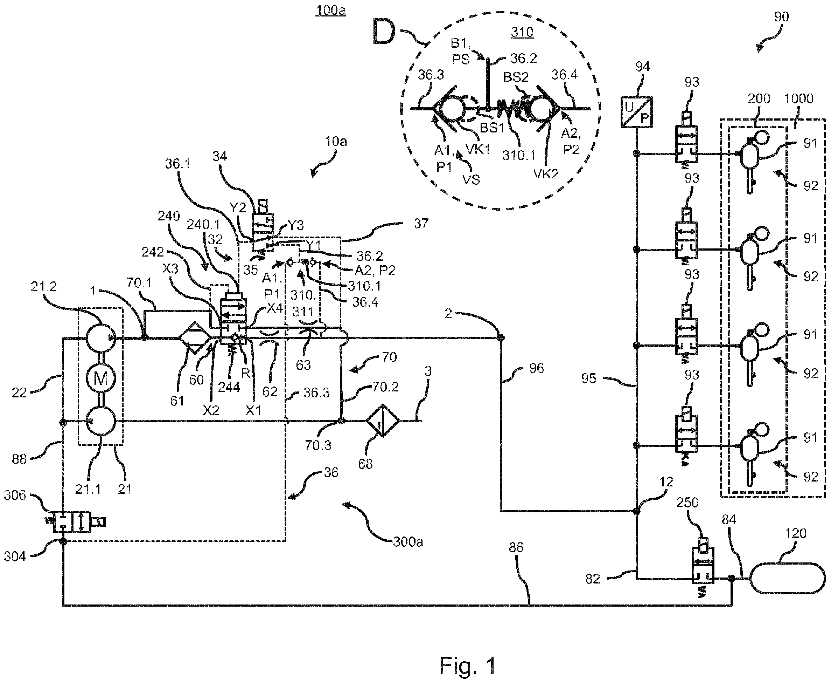

Fig. 1 zeigt eine bevorzugte Ausführung eines pneumatischen Systems 100a mit einer Druckluftversorgungsanlage 10a und einer Luftfederanlage 90 für eine symbolisch gezeigte Fahrzeugfederung eines nicht näher gezeigten Fahrzeugs 1000. Die Druckluftversorgungsanlage 10a weist eine Druckluftzuführung 1, einen Druckluftanschluss 2 zur Luftfederanlage 90 sowie einen Entlüftungsanschluss 3 zur Umgebung auf. Ferner umfasst die Druckluftversorgungsanlage 10a eine pneumatische Hauptleitung 60 zwischen der Druckluftzuführung 1 und dem Druckluftanschluss 2.

Diese und die nachfolgend beschriebene grundsätzliche Maßgabe zum Aufbau des pneumatischen Systems mit der Druckluftversorgungsanlage 10a und der Pneumatikanlage 90 gelten auch für die in Fig. 1 bis Fig. 3 gezeigten Varianten eines pneumatischen Systems 100a, 100b, 100c mit entsprechender Druckluftversorgungsanlage 10a, 10b, 10c,. Nachfolgend sind für identische oder ähnliche Merkmale bzw. Teile identischer oder ähnlicher Funktion der Einfachheit halber gleiche Bezugszeichen verwendet worden, wo dies sinnvoll und zweckmäßig ist; gleichwohl ist zu verstehen, dass für die pneumatischen Systeme 100a bis 100c und die Druckluftversorgungsanlagen 10a bis 10c unterschiedliche Varianten von Komponenten und Bauteilen zum Einsatz kommen können.

Die pneumatische Hauptleitung 60 weist einen Lufttrockner 61 sowie eine erste Drossel 62 auf. Eine Entlüftungsleitung 70 der Druckluftversorgungsanlage 10a verbindet die Druckluftzuführung 1 über ein Entlüftungsventil 240 und eine zweite Drossel 63 mit dem Entlüftungsanschluss 3. Ein erster Teil 70.1 der Entlüftungsleitung 70 verbindet dabei die Druckluftzuführung 1 mit dem Entlüftungsventil 240. Ein zweiter Teil 70.2 der Entlüftungsleitung 70 verbindet weiterhin das Entlüftungsventil 240 mit einem Anschlusspunkt 70.3. Der Anschlusspunkt 70.3 ist wiederum unter anderem über einen Luftfilter 68 mit dem Entlüftungsanschluss 3 verbunden. Ein Galeriehauptanschluss 12 der Luftfederanlage 90 ist mit dem Druckluftanschluss 2 über eine Versorgungsleitung 96 verbunden.

Weiterhin kann mittels eines Vorsteuerventils 34 ein Vorsteueranschluss 240.1 des Entlüftungsventils 240 selektiv mit Druck beaufschlagt werden, sodass das Entlüftungsventil 240 pneumatisch geöffnet und geschlossen werden kann.

Vorliegend ist das Entlüftungsventil 240 als 4/2-Wegeventil ausgebildet. In der hier gezeigten Darstellung ist das Entlüftungsventil 240 in einer ersten, Förderstellung dargestellt. In dieser Förderstellung des Entlüftungsventils 240 kann Druckluft von einem zweiten pneumatischen Anschluss X2 zu einem ersten pneumatischen Anschluss X1 strömen, und zwar durch ein sich gegen eine Federkraft öffnendes Rückschlagventil R. Somit strömt die vom Verdichter 21 geförderte Druckluft über die pneumatische Hauptleitung 60 von der Druckluftzuführung 1 zu dem Druckluftanschluss 2 und weiter zur Pneumatikanlage 90. Die pneumatische Verbindung zwischen einem dritten pneumatischen Anschluss X3 und einem vierten pneumatischen Anschluss X4 ist in der Förderstellung des Entlüftungsventil 240 getrennt, was dazu führt, dass die Entlüftungsleitung 70 unterbrochen ist.

Das Entlüftungsventil 240 kann insbesondere durch pneumatische Betätigung, insbesondere über einen Vorsteueranschluss 240.1, von der dargestellten gesperrten Stellung in eine Entlüftungsstellung gebracht werden. In dieser Entlüftungsstellung kann zum einen Luft vom Druckluftanschluss 2 und weiter vom ersten pneumatischen Anschluss X1 zum zweiten pneumatischen Anschluss X2 durch den Lufttrockner 61 strömen. Über die Druckluftzuführung 1 kann die Luft dann weiter von der Druckluftzuführung 1 und weiter vom dritten pneumatischen Anschluss X3 zum vierten pneumatischen Anschluss X4 über die Entlüftungsleitung 70 zum Entlüftungsanschluss 3 strömen. Auf diese Weise kann der Lufttrockner 61 zwecks Regeneration mittels Druckluft aus einem Druckspeicher 120 oder einer Pneumatikanlage 90 entgegen der eigentlichen Förderrichtung durchströmt werden.

Auf der rechten Seite der Fig. 1 gut erkennbar ist eine Pneumatikanlage 90 in Form einer Luftfederanlage eines Fahrzeugs bereitgestellt. Die Luftfederanlage 90 weist eine Galerie 95 auf, an der, jeweils pneumatisch trennbar durch ein als 2/2-Wege-Magnetventil ausgebildetes Wegeventil 93, an das jeweils ein Federbalg 91 einer Luftfeder 92 angeschlossen ist. Mit der Galerie 95 verbunden ist ein Drucksensor 94.

Der Drucksensor 94 ist mit einer hier nicht weiter dargestellten Einrichtung 400 zum Steuern- und Regeln des pneumatischen Systems 100 verbunden, welche hierzu weiterhin signalleitend mit den Ventilen des pneumatischen Systems 100 verbunden ist, insbesondere der Wegeventile 93, dem Vorsteuerventil 34, einem Druckspeicher-Ventil 250, einem Aufladeventil 306 und/oder einem Vorsteuerschaltventil 307. Diese Verbindungen sind vorliegend aus Gründen der Übersichtlichkeit nicht dargestellt. Eine derartige Einrichtung kann beispielsweise durch eine Electronic Control Unit (ECU) gebildet sein.

Weiterhin weist die Druckluftversorgungsanlage 10 vorliegend einen Druckspeicher 120 auf. Der Druckspeicher 120 ist über eine Druckspeicher-Zuleitung 82 mit dem Galeriehauptanschluss 12 gasführend verbunden. Über das Druckspeicher-Ventil 250 kann diese Verbindung selektiv unterbrochen werden.

Die Verdichteranordnung 21 wird vorliegend von einem Motor M angetrieben und saugt zwecks Verdichtung Luft über den Entlüftungsanschluss 3 an. Zwischen Verdichteranordnung 21 und Entlüftungsanschluss 3 ist ein Luftfilter 68 angeordnet. Vorliegend weist der Verdichter 21 eine Niederdruckstufe 21.1 und eine Hochdruckstufe 21.2 auf, die über eine Zwischenleitung 22 pneumatisch miteinander verbunden sind derart, dass die vom Entlüftungsanschluss 3 angesaugte und in der Niederdruckstufe 21.1 vorverdichtete Druckluft in die Hochdruckstufe 21.2 strömen kann, und dort auf ein Hochdruckniveau weiterverdichtet wird, um dann an der Druckluftzuführung 1 bereitgestellt zu werden.

Außerdem ist ein zweiter Vorsteueranschluss 242 am Entlüftungsventil 240 derart vorgesehen, dass das Entlüftungsventil 240 unter Abgreifen eines Drucks an der pneumatischen Hauptleitung 60 betätigt werden kann.

Die Pneumatikanlage 90 weist vorliegend fünf Niveauregelventile auf, die als Balgventil in Form eines Wegeventils 93 und als Druckspeicherventil 250, in Form eines Magnet-Wegeventils gebildet sind; nämlich als ein 2/2-Magnet-Wegeventil. Die als Magnet-Wegeventile ausgebildeten Balg- oder Druckspeicherventile 93, 250 sind über eine Galerie 95 miteinander verbunden, wobei die Galerie 95 über eine weitere Versorgungsleitung 96 an die pneumatische Hauptleitung 60 über den Druckluftanschluss 2 angebunden ist.

Zum Betrieb der Pneumatikanlage 90 lassen sich -- je nach gemessenem Höhenniveau-- die Luftfedern bildenden Bälge 91 aus der Druckluftversorgungsanlage 10a mit Druckluft über den Druckluftanschluss 2 befüllen; dies dient der Niveauanhebung des Aufbaus des Fahrzeugs 1000. Umgekehrt lassen sich die Luftbälge 91 über den Druckluftanschluss 2 in Gegenrichtung entlüften zu einem Entlüftungsanschluss 3, so dass sich das Niveau des Fahrzeugaufbaus 200 unter Entweichen von Druckluft aus den Federbälgen 91 senkt. Zum Befüllen der Pneumatikanlage 90 über den Druckluftanschluss 2 befindet sich das Entlüftungsventil 240 in der vorliegend gezeigten, strom- bzw. drucklos geschlossenen Förderstellung. Ebenso ist der dritte und vierte pneumatische Anschluss X3, X4 pneumatisch getrennt, d. h. der erste Teil 70.1 der Entlüftungsleitung 70 gegen den zweiten Teil 70.2 der Entlüftungsleitung 70 geschlossen.

Zum Entlüften der Pneumatikanlage 90 wird eine geeignete Bestromung der Magnetspule des Vorsteuerventils 34 mittels einem über eine hier nicht dargestellte Leitung geführten Stromsignal vorgenommen; als Folge wird die Magnetspule des Vorsteuerventils 34 bestromt und gegen den Federdruck einer Steuer-Ventilfeder 35 geöffnet. Damit wird die Steuerleitung 36 über das Vorsteuerventil 34 geöffnet, d. h. der erste Teil 36.1 der Steuerleitung 36 wird mit dem zweiten Teil 36.2 der Steuerleitung 36 zum Vorsteueranschluss 240.1 verbunden. Ein in der Steuerleitung 36 anliegender Steuerdruck PS wird am Vorsteueranschluss 240.1 aufgebaut und wirkt gegen die Kraft der Entlüftungs-Ventilfeder 244 des Entlüftungsventils 240; öffnet schließlich den dritten pneumatischen Anschluss X3 zum vierten pneumatischen Anschluss X4 des Entlüftungsventils 242; also die Entlüftungsleitung 70 und einen Ausgang des Lufttrockners 61 zum Entlüftungsanschluss 3. Der erste pneumatische Anschluss X1 wird gleichzeitig mit dem zweiten pneumatischen Anschluss X2 verbunden, sodass die sperrende Wirkung des Rückschlagventils R im Entlüftungsventil 240 aufgehoben ist. Bei derart geöffneten Ventilanschlüssen X3, X4 des Entlüftungsventils 240 in der Entlüftungsleitung 70 wird vorliegend der Vorsteueranschluss 240.1 unter Steuerdruck PS gehalten.

Diese Anordnung aus Vorsteuerventil 34 mit Steuerleitung 36 zum Vorsteueranschluss 240.1 des Entlüftungsventils 240, Auswahlventil 310 und dem Entlüftungsventil 240 wird nachfolgend auch als druckhaltende pneumatische Ventileinrichtung 300a bezeichnet bzw. analog in den weiteren Figuren als druckhaltende pneumatische Ventileinrichtung 300a, 300b, 300c - durch die druckhaltende pneumatische Ventileinrichtung 300a, 300b, 300c --insbesondere auch bei einem gegebenenfalls während des Entlüftungsvorgangs in der Hauptleitung 60 abfallenden Luftdrucks-- wird der Vorsteueranschluss 240.1 unter Steuerdruck PS gehalten.

Darüber hinaus ist gemäß dem Konzept der vorliegenden Erfindung in den im weiteren erläuterten Ausführungsformen vorgesehen, dass bei geöffneten pneumatischen Anschlüssen X3, X4 des Entlüftungsventils 240 in der Entlüftungsleitung 70 der Vorsteueranschluss 240.1 unter Steuerdruck PS gehalten wird; dies unabhängig von einem Druck in der Entlüftungsleitung 70 und der pneumatischen Hauptleitung 60. Insbesondere kann mittels einer druckhaltende pneumatische Ventileinrichtung 300a, 300b, 300c der Steuerdruck PS gehalten werden, insbesondere obwohl ein Druck in der Entlüftungsleitung 70 und/oder in der pneumatischen Hauptleitung 60 unter einen Resthaltedruck, d. h. einen durch die Entlüftungs-Ventilfeder 244 zur Betätigung des Entlüftungsventils 240 vorgegebenen Druck absinken kann. So ist gemäß allen im Folgenden erläuterten Ausführungsformen gewährleistet, dass der Druck in der Entlüftungsleitung 70 und der pneumatischen Hauptleitung 60 praktisch bis auf einen Umgebungsdruck absinken kann, sodass die Federbälge 91 bis auf einen Umgebungsdruck entlüftet werden können.

Bezugnehmend auf Fig. 1 wird zum Entlüften die Spule des als 3/2-Ventil ausgebildeten Vorsteuerventils 34 bestromt und das Vorsteuerventil 34 geht von dem in Fig. 1 gezeigten stromlosen Zustand in den bestromten Zustand über, bei dem der erste Vorsteuerventil-Anschluss Y1 mit dem zweiten Vorsteuerventil-Anschluss Y2 pneumatisch verbunden ist; d. h. der erste Teil der Steuerleitung 36.1 und der zweite Teil 36.2 der Steuerleitung 36 sind zum Vorsteueranschluss 240.1 miteinander verbunden.

Ein sich an den zweiten Teil 36.2 anschließender dritter Teil 36.3 der Steuerleitung 36 verbindet den ersten Vorsteuerventil-Anschluss Y1 weiter mit einem Abzweigpunkt 304, an dem die Steuerleitung 36 pneumatisch mit einer Zuführleitung 86 verbunden ist. Die Zuführleitung 86 ist wiederum über eine Speicherleitung 84 mit dem Druckluftspeicher 120 pneumatisch verbunden.

Im Folgenden wird die Funktionsweise der druckhaltenden pneumatischen Ventileinrichtung 300a näher erklärt. Zum Betätigen des Entlüftungsventils 240 wird das als 3/2-Wegeventil ausgebildete Vorsteuerventil 34 in eine Ansteuerstellung geschaltet zum Öffnen des Vorsteuerventils 34 in der Steuerleitung 36. In dieser Ansteuerstellung kann nun Druckluft, welche an dem ersten Vorsteuerventil-Anschluss Y1 anliegt, vom Druckspeicher 120 über die Speicherleitung 84, die Zuführleitung 86 und die Steuerleitung 36 über den zweiten Vorsteuerventil-Anschluss Y2 und den ersten Teil 36.1 der Steuerleitung 36 zum Vorsteueranschluss 240.1 des Entlüftungsventil 240 strömen. Auf diese Weise kann die im Druckspeicher 120 gespeicherte Druckluft, insbesondere unabhängig von einem in der pneumatischen Hauptleitung 60 herrschenden Druck, zur Beaufschlagung des Vorsteueranschlusses 240.1 und somit zur Betätigung des Entlüftungsventils 240 genutzt werden.

Die Zuführleitung 86 ist über den Abzweigpunkt 304 weiterhin mit einer Aufladeleitung 88 verbunden, welche pneumatisch mit der Zwischenleitung 22 verbunden ist und über die der Verdichter 21 mit Druckluft aus dem Druckspeicher 120 aufgeladen werden kann. Die Aufladeleitung 88 kann über ein Aufladeventil 306 selektiv mit der Zuführleitung 86 verbunden oder unterbrochen werden. Auf diese Weise kann Druckluft, welche insbesondere zu einem vorherigen Zeitpunkt verdichtet wurde und im Druckspeicher 120 gespeichert ist, über die Zuführleitung 86, die Aufladeleitung 88 und schließlich die Zwischenleitung 22 als bereits vorverdichtete Druckluft in die Hochdruckstufe 21.2 des Verdichters 21 geführt werden.

Wie ersichtlich wird, wird vorliegend die Zuführleitung 86 vorteilhaft für mindestens zwei Zwecke genutzt, nämlich zum einen zur ständigen Beaufschlagung der druckhaltenden pneumatische Ventileinrichtung 300a und insbesondere der Steuerleitung 36 bzw. zur selektiven Beaufschlagung des Vorsteueranschlusses 240.1 des Entlüftungsventils 240 und zum anderen der selektiven Aufladung des Verdichters 21. Auf diese Weise ist eine zusätzliche, separate Leitung für eine der beiden Zwecke, insbesondere für die druckhaltende Ventileinrichtung, nicht zwingend erforderlich und der konstruktive Aufwand, insbesondere der benötigte Bauraum, wird somit reduziert.

Zum Beenden des so geschalteten Entlüftungsvorgangs werden zunächst die als, hier Magnet-Wegeventil 93 ausgebildeten Balgventile geschlossen und die Bestromung der Magnetspule des als 3/2-Ventil ausgebildeten Vorsteuerventils 34 wird aufgehoben, so dass dieses unter Wirkung der Steuer-Ventilfeder 35 in den stromlosen in Fig. 1 geschalteten Zustand zurückfällt. Das 3/2-Wegeventil fällt in seinen in Fig.1 gezeigten Zustand zurück und der dritte Vorsteuerventil-Anschluss Y3 und der zweite Vorsteuerventil-Anschluss Y2 des als 3/2-Wegeventils ausgebildeten Vorsteuerventils werden pneumatisch miteinander verbunden. Dadurch wird ein Vorsteuerkanal 32, insbesondere der erste Teil 36.1 der Steuerleitung 36 mit dem Vorsteueranschluss 240.1 über eine mit der Entlüftungsleitung 70 verbundene Steuerentlüftungsleitung 37 auf Umgebungsdruck entlüftet und die Entlüftungs-Ventilfeder 244 des Entlüftungsventils 240 schließt den Relaiskolben, so dass das Entlüftungsventil 240 in den in Fig. 1 gezeigten nicht druckbeaufschlagten Zustand zurückfällt und den zweiten Teil 70.2 der Entlüftungsleitung 70 vom ersten Teil 70.1 und somit auch von der Stammleitung 60 trennt, d. h. den dritten pneumatischen Anschluss X3 und vierten pneumatischen Anschluss X4 in der Entlüftungsleitung 70 trennt.

Die in Fig. 1 dargestellte Ventileinrichtung 300a weist weiter ein Auswahlventil 310 auf. Das Auswahlventil 310 ist in der Steuerleitung 36 derart angeordnet, dass es im Sinne einer Verzweigung den zweiten Teil 36.2 der Steuerleitung 36 zum einen in einer ersten Betriebsstellung BS1 mit einem dritten Teil 36.3 der Steuerleitung 36 verbindet - welcher analog zu der in Fig. 1 gezeigten Weiterbildung die Steuerleitung 36 mit der Zuführleitung 86 verbindet - zum anderen jedoch zusätzlich in einer zweiten Betriebsstellung BS2 den zweiten Teil 36.2 mit einem vierten Teil 36.4 der Steuerleitung 36 verbindet, welcher den zweiten Teil 36.2 der Steuerleitung 36 mit der pneumatischen Hauptleitung 60 pneumatisch verbindet.

Das Auswahlventil 310 ist in Detail D der Fig. 1 näher dargestellt. Hierbei stellen die Begriffe "Auswahlventil" und "Wechselventil" keine Beschränkung auf ein einziges physikalisches Ventil dar, und können genauso im Sinne einer "Auswahlventilanordnung" und "Wechselventilanordnung" verstanden werden. Ein Auswahlventil lässt sich beispielsweise mit zwei gesonderten Rückschlagventilen, von denen eines eine zusätzliche Feder aufweist, darstellen.

Das Auswahlventil 310 mit einem ersten Eingang A1 und einem zweiten Eingang A2 ist hierbei als pneumatisches Wechselventil 311 ausgebildet, das heißt dass der jeweilige Eingang A1, A2, an dem ein relativ stärkerer Druck P1, P2 anliegt, geöffnet ist und der jeweils andere Eingang A1, A2 geschlossen. Liegt vorliegend also an dem dritten Teil 36.3 der Steuerleitung 36 - und somit am ersten Eingang A1 - ein höherer Druck P1 als ein Druck P2 am vierten Teil 36.4 - und somit am zweiten Eingang A2 - an, weil der Druck der im Druckspeicher 120 gespeicherten Druckluft höher ist als der Druck in der pneumatischen Hauptleitung 60, dann kann - in der ersten Betriebsstellung (BS1) des Auswahlventils 310 - entsprechend die Druckluft aus dem dritten Teil 36.3 durch den ersten Eingang A1 in den zweiten Teil 36.2 der Steuerleitung 36 strömen, wobei die Durchströmung des vierten Teils 36.4 am zweiten Eingang A2 des Auswahlventils 310 unterbrochen ist. Umgekehrt gilt analog, dass wenn der Druck in der pneumatischen Hauptleitung 60, die sich von der Druckluftzuführung 1 zum Druckluftanschluss 2 erstreckt, höher ist als der Druck im Druckspeicher 120 - in der zweiten Betriebsstellung (BS2) des Auswahlventils 310 - Luft vom vierten Teil 36.4 über den zweiten Eingang A2 in den zweiten Teil 36.2 (und bei Ansteuerstellung des Vorsteuerventils 34 weiter zum Vorsteueranschluss 240.1 des Entlüftungsventil 240) strömen kann und die Durchströmung des dritten Teils 36.3 der Steuerleitung 36 entsprechend am ersten Eingang A1 des Auswahlventils 310 gesperrt ist.

Die Sperrung des jeweiligen mit einem niedrigeren Druck P1, P2 beaufschlagten Eingangs A1, A2 wird durch die Anordnung der beiden Ventilkörper VK1, VK2 im als Wechselventil 311 ausgebildeten Auswahlventil 310 erreicht, die sich jeweils im Sinne eines Rückschlagventils nur in eine Strömungsrichtung öffnen können, und in die entgegengesetzte Strömungsrichtung verschließen. Die Luft aus dem mit einem höheren Druck P1, P2 beaufschlagten Eingang A1, A2 drückt somit einen Ventilkörper VK1, VK2 des mit einem niedrigeren Druck beaufschlagten Eingangs A1, A2 zurück, so dass dieser gesperrt wird. Durch die Funktion eines Wechselventils 311 wird mittels des Auswahlventils 310 generell stets die Druckluftquelle mit dem höheren Druck P1, P2 zur Beaufschlagung des Vorsteueranschlusses 240.1 verwendet. Ist zum Beispiel der Druckspeicher 120 soweit entleert, dass der Luftdruck zum Vorsteuern des Entlüftungsventil 240 nicht mehr ausreicht, so wird, sofern der Luftdruck in der pneumatischen Hauptleitung 60 höher ist, die Luft zur Beaufschlagung des Vorsteueranschlusses 240.1 des Entlüftungsventils 240 automatisch aus der pneumatischen Hauptleitung 60, die sich von der Druckluftzuführung 1 zum Druckluftanschluss 2 erstreckt, dem Vorsteueranschluss 240.1 zugeführt. Das Auswahlventil 310 befindet sich dabei in der ersten Betriebsstellung BS1. Zur Erhöhung des Luftdrucks in der pneumatischen Hauptleitung 60 kann insbesondere Luft aus den Federbälgen 91 durch entsprechendes Öffnen der Wegeventile 93 in die pneumatische Hauptleitung 60 geleitet werden.

Sollte im Auswahlventil 310 an dem Anschluss ersten Eingang A1 und an dem zweiten Eingang A2 Druckgleichheit herrschen, kann über eine Feder 310.1 eine Vorzugsstellung VS vorgegeben werden. Vorliegend liegt diese Vorzugsstellung VS am ersten Eingang A1 und verbindet den dritten Teil 36.3 der Steuerleitung 36 mit dem zweiten Teil 36.2 der Steuerleitung 36, die erste Betriebsstellung BS1 wird somit bevorzugt eingestellt. Folglich muss ein am zweiten Eingang A2 anliegender Druck P2 sowohl den am ersten Eingang A1 anliegenden Druck P1 als auch eine Federkraft F der den zweiten Eingang A2 verschließenden Feder 310.1 überwinden.

Das in Fig. 1 dargestellte Auswahlventil 310 an dem zweiten Teil 36.2 der als Vorsteuerkanal 32 dienenden Steuerleitung 36 hält weiterhin einen einmal in den zweiten Teil 36.2 der Steuerleitung 36 eingespeisten Steuerdruck PS auf konstantem Niveau, so dass der Relaiskolben des Entlüftungsventils 240 in Folge des am Vorsteueranschluss 240.1 --auch unabhängig von einem Druck in der Entlüftungsleitung 70 und der pneumatischen Hauptleitung 60-- gehaltenen Steuerdrucks PS aktuiert bleibt und das Entlüftungsventil 240 in der Entlüftungsleitung 70 geöffnet bleibt. Auf diese Weise kann die Pneumatikanlage 90 über die Drossel 62, den Lufttrockner 61 und schließlich die Entlüftungsleitung 70 zum Entlüftungsanschluss 3 entlüftet werden. Die Nennweite der Drossel 62 ist dazu in einer zur Regeneration des Lufttrockners 61 vorteilhaften Größe ausgelegt.

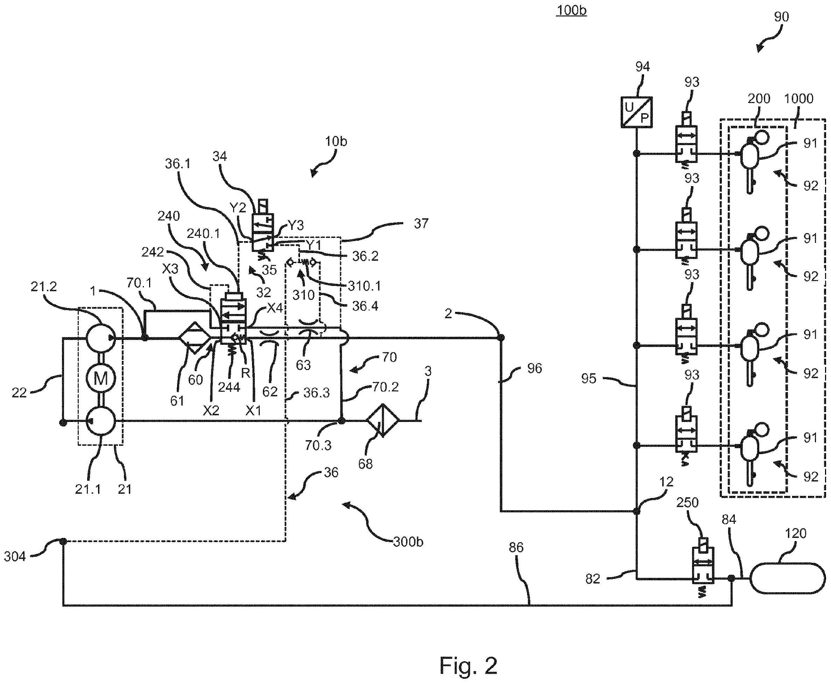

Fig. 2 zeigt eine weitere Weiterbildung eines pneumatischen Systems 100b, die sich im Wesentlichen von der in Fig. 1 dargestellten Weiterbildung dadurch unterscheidet, dass keine Aufladeleitung 88 zwischen dem Abzweigpunkt 304 und der Zwischenleitung 22 vorgesehen ist. Somit besteht bei dieser Weiterbildung keine Möglichkeit zur Aufladung des Verdichters 21 durch Druckluft aus dem Druckspeicher 120. Folglich dient die Zuführleitung 86 ausschließlich der Druckbeaufschlagung der Steuerleitung 36, insbesondere des dritten Teils 36.3 der Steuerleitung 36. Dennoch kann auch hier vorteilhaft, wie auch schon bei den beiden vorherig gezeigten Weiterbildungen, eine druckhaltenden Ventileinrichtung 300b realisiert werden, insbesondere unter Verwendung einer bereits vorhandenen Leitung, insbesondere einer - ursprünglich oder in anderen Bauformen - zur Aufladung vorgesehenen Leitung. Diese Leitung kann beispielsweise Teil eines Systems aus in ein - hier nicht dargestelltes - Gehäuse 21 eingearbeiteter Leitungen sein, wobei das Gehäuse ein oder mehrere Teile des pneumatischen Systems 100b einhaust.

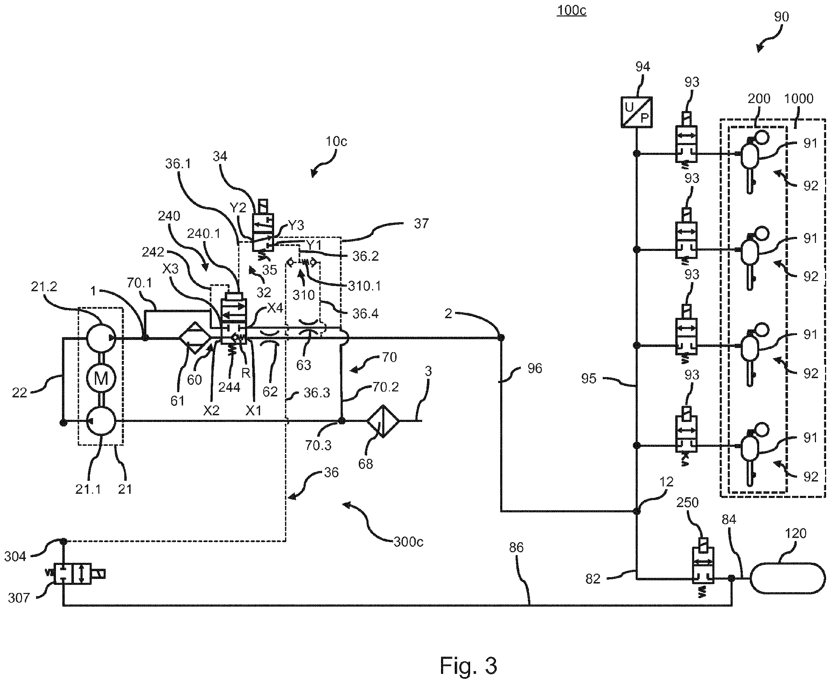

Fig. 3 zeigt eine weitere Weiterbildung der Erfindung, die sich im Wesentlichen von der in Fig. 2 dargestellten Weiterbildung dadurch unterscheidet, dass die Beaufschlagung der Steuerleitung 36, insbesondere des dritten Teils 36.3, durch ein in der Zuführleitung 86 angeordnetes Vorsteuerschaltventil 307 steuerbar ist. Auf diese Weise kann insbesondere vorteilhaft vermieden werden, dass die Steuerleitung 36, insbesondere der dritte Teil 36.3, ständig unter Druck steht. Durch diese Steuerbarkeit kann insbesondere eine Leckage von aus dem Druckspeicher 120 über die Steuerleitung 36 entweichender Druckluft verringert oder vermieden werden.

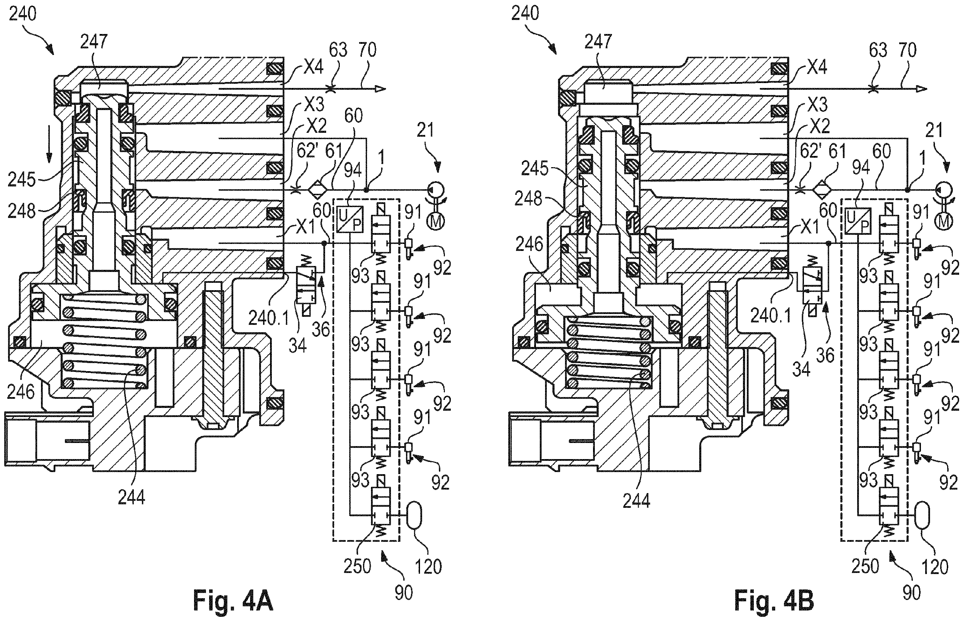

Fig. 4A zeigt ein Entlüftungsventil 240 in der Förderstellung, das heißt wenn ein Verdichter 21 Luft, insbesondere zwecks Verwendung in einem pneumatischen System 90, verdichtet. Hierzu wird die vom Verdichter 21 verdichtete Luft über eine pneumatische Hauptleitung 60 und einen Lufttrockner 61 zum zweiten pneumatischen Anschluss X2 geführt. Von dort gelangt die Luft in den Entlüftungs-Ventilzylinder 247, wo sie, vorbei an einem Entlüftungs-Ventilkolben 245, und insbesondere an einem Dichtring 248, zum ersten pneumatischen Anschluss X1 strömt. Die Anordnung von Entlüftungs-Ventilkolben 245, Entlüftungs-Ventilzylinder 247 und Dichtring 248 ist derart, dass Luft vom zweiten pneumatischen Anschluss X2 zum ersten pneumatischen Anschluss X1 strömen kann, jedoch nicht umgekehrt vom ersten pneumatischen Anschluss X1 zum zweiten pneumatischen Anschluss X2. Somit wird mit dieser Anordnung die Funktion eines Rückschlagventils erfüllt. Von dort gelangt die Luft weiter auf die pneumatische Hauptleitung 60 und schließlich, stark vereinfacht dargestellt, zur Pneumatikanlage 90. An dem hier dargestellten Abschnitt der pneumatischen Hauptleitung 60 zwischen dem ersten pneumatischen Anschluss X1 und der Pneumatikanlage 90 ist vorliegend eine Abzweigung zur Steuerleitung 36 angeordnet. Die Steuerleitung 36 stellt eine pneumatische Verbindung zwischen der pneumatischen Hauptleitung 60 und dem Vorsteueranschluss 240.1 des Entlüftungsventils 240 her, wobei diese pneumatische Verbindung durch ein in der Steuerleitung 36 angeordnetes und als Magnetventil ausgebildetes Vorsteuerventil 34 selektiv geschlossen und unterbrochen werden kann. Aus Gründen der Vereinfachung wird in den Figuren 4A und 4B auf die Darstellung einer druckhaltenden pneumatischen Ventileinrichtung gemäß dem Konzept der Erfindung verzichtet.

Vorteilhaft können die zu den Anschlüssen X1 bis X4 führenden Leitungen gedrosselt werden, wie vorliegend durch eine in der Leitung zum zweiten pneumatischen Anschluss X2 des Entlüftungsventils 240 angeordnete erste Drossel 62' und eine in der Leitung zum vierten pneumatischen Anschluss X4 angeordnete zweite Drossel 63.

Weiterhin ist in der Förderstellung die Stellung des Entlüftung-Ventilkolbens 245 innerhalb des Entlüftung-Ventilzylinders 247 derart, dass die Durchströmung von einem dritten pneumatischen Anschluss X3 zu einem vierten pneumatischen Anschluss X4 gesperrt ist. Auf diese Weise ist die pneumatische Verbindung zwischen der Druckluftzuführung 1 und der Entlüftungsleitung 70 getrennt.

In Fig. 4B ist das Entlüftungsventil 240 in einer Regenerations- bzw. Entlüftungsstellung dargestellt. In der Regenerations-/Entlüftungsstellung ist das Vorsteuerventil 34 derart geöffnet, dass Luft in den Vorsteueranschluss 240.1 gelangen kann und von dort weiter in eine Steuerkammer 246. Die in die Steuerkammer 246 strömende Druckluft führt dazu, dass sich der Entlüftungs-Ventilkolben 245 gegen die Rückstellkraft einer Entlüftungs-Ventilfeder 244 nach unten bewegt. In dieser Stellung des Entlüftungs-Ventilkolbens 245 kann Luft sowohl vom ersten pneumatischen Anschluss X1 zum zweiten pneumatischen Anschluss X2 als auch umgekehrt vom zweiten pneumatischen Anschluss X2 zum ersten pneumatischen Anschluss X1 strömen. Gleichzeitig kann Luft sowohl vom dritten pneumatischen Anschluss X3 zum vierten pneumatischen Anschluss X4 als auch umgekehrt vom vierten pneumatischen Anschluss X4 zum dritten pneumatischen Anschluss X3 strömen.

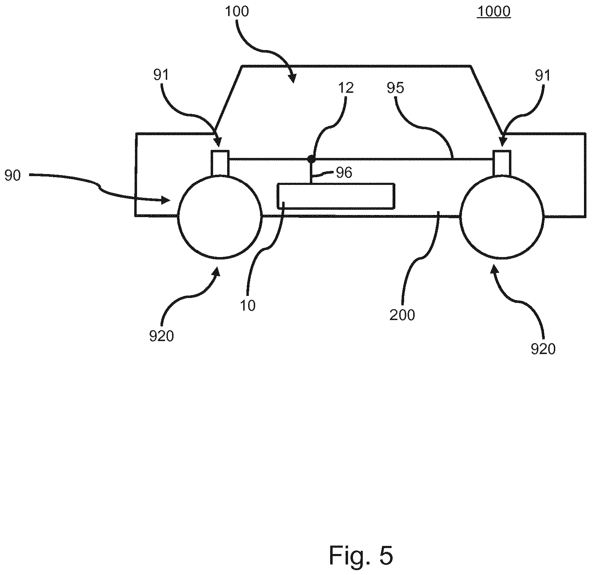

Fig. 5 zeigt eine schematische Darstellung eines Fahrzeugs 1000 --vorliegend in Form eines PKW-- mit einem Fahrzeugaufbau 200, aufweisend ein pneumatisches System 100 gemäß dem Konzept der Erfindung mit einer Druckluftversorgungsanlage 10 und einer als Luftfederanlage ausgebildeten Pneumatikanlage 90. Insbesondere bei Fahrzeugen im PKW-Bereich ist eine schnelle Bereitstellung von Druckluft zur Niveauregelung im Betrieb von großer Bedeutung, da Pausen, insbesondere zur Durchführung einer Luftdruckmessung, vom Fahrer des Fahrzeugs wahrnehmbar sind. Das hier deswegen, ohne Einschränkung der Anwendbarkeit auch für LKWs oder andere Nutzfahrzeuge, beispielhaft dargestellte PKW-Fahrzeug 1000 verfügt über vier Räder 920, von denen hier aufgrund der Schnittdarstellung die zwei einer Fahrzeugseite zugeordneten Räder gezeigt sind. Analog zur Anzahl der Räder verfügt die Luftfederanlage 90 über vier Luftfedern 92, von denen hier analog zu den Rädern aufgrund der Schnittdarstellung die zwei einer Fahrzeugseite zugeordneten Bälgen gezeigt sind. Die vier Luftfedern 92, die jeweils den vier Rädern 920 zugeordnet sind, werden als Teil der Luftfederanlage 90 von der Druckluftversorgungsanlage 10 mit Druckluft versorgt. Die Druckluftversorgungsanlage 10 ist über die Versorgungsleitung 96, den Galeriehauptanschluss 12 und die Galerie 95 mit den Komponenten der Pneumatikanlage 90, in diesem Falle den vier Luftfedern 92, verbunden.

### Bezugszeichenliste (Bestandteil der Beschreibung)

- 1: Druckluftzuführung
- 2: Druckluftanschluss
- 3: Entlüftungsanschluss
- 10, 10a - d: Druckluftversorgungsanlage
- 12: Galeriehauptanschluss
- 21: Verdichteranordnung, Verdichter
- 21.1: Niederdruckstufe
- 21.2: Hochdruckstufe
- 22: Zwischenleitung
- 32: Vorsteuerkanal
- 34: Vorsteuerventil
- 35: Steuer-Ventilfeder
- 36: Steuerleitung
- 36.1: Erster Teil der Steuerleitung
- 36.2: Zweiter Teil der Steuerleitung
- 36.3: Dritter Teil der Steuerleitung
- 36.4: Vierter Teil der Steuerleitung
- 37: Steuerentlüftungsleitung
- 60: pneumatische Hauptleitung
- 61: Lufttrockner
- 62, 62': Erste Drossel
- 63: Zweite Drossel
- 68: Luftfilter
- 70: Entlüftungsleitung
- 70.1: Erster Teil der Entlüftungsleitung
- 70.2: Zweiter Teil der Entlüftungsleitung
- 70.3: Anschlusspunkt
- 82: Druckspeicher-Zuleitung
- 84: Speicherleitung
- 86: Zuführleitung
- 88: Aufladeleitung
- 90: Luftfederanlage, Pneumatikanlage
- 91: Federbalg, Balg
- 92: Luftfeder
- 93: Wegeventil
- 94: Drucksensor
- 95: Galerie
- 96: Versorgungsleitung
- 98: Magnetventilblock
- 100, 100a - d: Pneumatisches System
- 120: Druckspeicher
- 200: Fahrzeugaufbau
- 240: Entlüftungsventil
- 240.1: Vorsteueranschluss des Entlüftungsventils
- 242: Zweiter Vorsteueranschluss des Entlüftungsventils
- 244: Entlüftungs-Ventilfeder
- 245: Entlüftungs-Ventilkolben
- 246: Steuerkammer
- 247: Entlüftungs-Ventilzylinder
- 248: Dichtring
- 250: Druckspeicher-Ventil
- 300a - 300c: druckhaltende pneumatische Ventileinrichtung
- 304: Abzweigpunkt
- 306: Aufladeventil
- 307: Vorsteuerschaltventil
- 310: Auswahlventil
- 310.1: Feder zum Vorgeben einer Vorzugsstellung
- 311: Wechselventil
- 400: Einrichtung zum Steuern- und Regeln des pneumatischen Systems
- 920: Rad
- 1000: Fahrzeug
- A1, A2: Erster, zweiter Eingang des Auswahlventils
- BS1, BS2: Erste, zweite Betriebsstellung
- B1: Ausgang des Auswahlventils
- F: Federkraft
- M: Motor
- P1, P2: Erster Druck (am ersten Eingang), zweiter Druck (am zweiten Eingang)
- PS: Steuerdruck
- R: Rückschlagventil des Entlüftungsventils
- VK1, VK2: Erster, zweiter Ventilkörper des Auswahlventils
- VS: Vorzugsstellung
- X1: Erster pneumatischer Anschluss des Entlüftungsventils
- X2: Zweiter pneumatischer Anschluss des Entlüftungsventils
- X3: Dritter pneumatischer Anschluss des Entlüftungsventils
- X4: Vierter pneumatischer Anschluss des Entlüftungsventils
- XY: Leitungsanschluss
- Y1: Erster Vorsteuerventil-Anschluss
- Y2: Zweiter Vorsteuerventil-Anschluss
- Y3: Dritter Vorsteuerventil-Anschluss

## Patentansprüche

1. Druckluftversorgungsanlage (10a, 10b, 10c), zum Betreiben einer Pneumatikanlage (90) in einem pneumatischen System (100a, 100b, 100c) eines Fahrzeugs (1000), aufweisend:
- eine Druckluftzuführung (1);
- einen Druckluftanschluss (2) zur Pneumatikanlage (90);
- einen Entlüftungsanschluss (3) zur Umgebung;
- eine pneumatische Hauptleitung (60) zwischen der Druckluftzuführung (1) und dem Druckluftanschluss (2), die einen Lufttrockner (61) aufweist;
- ein auf der pneumatischen Hauptleitung (60) angeordnetes, als Vorsteuerventil ausgebildetes Entlüftungsventil (240), mit einem Vorsteueranschluss (240.1),
- einen mindestens eine Verdichterstufe (21.1, 21.2) aufweisenden Verdichter (21),
- zusätzlich zur pneumatischen Hauptleitung (60), ein Vorsteuerventil (34) und einen pneumatischen Vorsteuerkanal (32), der das Vorsteuerventil (34) mit dem Vorsteueranschluss (240.1) des Entlüftungsventils (240) pneumatisch verbindet, wobei
- an den Vorsteueranschluss (240.1) eine druckhaltende pneumatische Ventileinrichtung (300a, 300b, 300c) angeschlossen ist, die ausgebildet ist, einen Steuerdruck (PS) für den Vorsteueranschluss (240.1) bereitzustellen,
- insbesondere unabhängig von einem Druck in der pneumatischen Hauptleitung (60) während eines Entlüftens des pneumatischen Systems (100a, 100b, 100c), und
- die druckhaltende pneumatische Ventileinrichtung (300) über eine Zuführleitung (86) pneumatisch mit einem Druckspeicher (120) verbindbar ist, **dadurch gekennzeichnet, dass**
- die druckhaltende pneumatische Ventileinrichtung (300) ein Auswahlventil (310) aufweist zum selbstständigen Verbinden des Vorsteueranschlusses (240.1) in einer ersten Betriebsstellung (BS1) mit der Zuführleitung (86) und in einer zweiten Betriebsstellung (BS2) mit der Hauptleitung (60) derart, dass die Leitung (86, 60), in welcher der relativ höhere Druck herrscht, mit dem Vorsteueranschluss (240.1) verbunden wird und die Leitung (86, 60), in welcher der relativ niedrigere Druck herrscht, zum Vorsteueranschluss (240.1) gesperrt wird.

2. Druckluftversorgungsanlage (10) nach Anspruch 1, **dadurch gekennzeichnet, dass** die Zuführleitung (86) zum Aufladen des Verdichters (21) pneumatisch mit dem Verdichter (21) verbindbar ist.

3. Druckluftversorgungsanlage (10) nach Anspruch 1 oder 2, **dadurch gekennzeichnet, dass** das Auswahlventil (310) als Wechselventil (311) ausgebildet ist.

4. Druckluftversorgungsanlage (10) nach einem der Ansprüche 1 bis 3, **dadurch gekennzeichnet, dass** das Auswahlventil (310) eine, insbesondere einstellbare, Vorzugsstellung (VS) aufweist derart, dass ein bei gleichen Drücken (P1, P2) am ersten Eingang (A1) und am zweiten Eingang (A2) des Auswahlventil (310) der Eingang (A1, A2) an der Vorzugstellung (VS) mit dem Ausgang (B1) des Auswahlventils (310) verbunden wird, und insbesondere der andere Eingang (A1, A2) gesperrt wird.

5. Druckluftversorgungsanlage (10) nach Anspruch 4, **dadurch gekennzeichnet, dass** das Auswahlventil (310) eine Feder (310.1) zum Vorgeben einer Vorzugsstellung (VS) aufweist.

6. Druckluftversorgungsanlage (10) nach einem der Ansprüche 1 bis 5, **dadurch gekennzeichnet, dass** der Verdichter (21) eine erste, Niederdruck-Verdichterstufe (21.1) und eine zweite, Hochdruck-Verdichterstufe (21.2) aufweist.

7. Druckluftversorgungsanlage (10) nach einem der Ansprüche 1 bis 6, **dadurch gekennzeichnet, dass** die Zuführleitung (86) über eine Aufladeleitung (88) zum Aufladen des Verdichters (21) pneumatisch mit dem Verdichter (21), insbesondere dem Eingang der Hochdruck-Verdichterstufe (21.2), verbindbar ist.

8. Druckluftversorgungsanlage (10a, 10b, 10c) nach einem der Ansprüche 1 bis 7, **dadurch gekennzeichnet, dass** die druckhaltende pneumatische Ventileinrichtung (300a, 300b, 300c) vollständig oder teilweise in die Druckluftversorgungsanlage (10a, 10b, 10c) integriert ist, insbesondere eine bauliche Einheit mit dieser bildet.

9. Verfahren zum Betreiben einer Druckluftversorgungsanlage (10a, 10b, 10c) nach einem der Ansprüche 1 bis 8, wobei die Druckluftversorgungsanlage (10a, 10b, 10c) zum Betreiben einer Pneumatikanlage (90) in einem pneumatischen System (100a, 100b, 100c) eines Fahrzeugs (1000) eingesetzt wird und eine druckhaltende pneumatische Ventileinrichtung (300a, 300b, 300c) aufweist, aufweisend die Schritte:
- Verdichten von Druckluft,
- Versorgen des pneumatischen Systems (100a, 100b, 100c), insbesondere der Pneumatikanlage (90) und/oder eines Druckspeichers (120) und/oder einer Galerie (95) mit Druckluft, - Betreiben der Pneumatikanlage (90),
- Entlüften des pneumatischen Systems (100a, 100b, 100c) über ein als Vorsteuerventil ausgebildetes Entlüftungsventil (240), mit einem Vorsteueranschluss (240.1),
wobei
- eine an den Vorsteueranschluss (240.1) angeschlossene druckhaltende pneumatische Ventileinrichtung (300a, 300b, 300c) den Vorsteueranschluss (240.1) unter Steuerdruck hält,
- insbesondere unabhängig von einem Druck in der pneumatischen Hauptleitung (60) während eines Entlüftens des pneumatischen Systems (100a, 100b, 100c),
- die druckhaltende pneumatische Ventileinrichtung (300) über eine Zuführleitung (86) pneumatisch mit einem Druckspeicher (120) verbindbar ist,
- die druckhaltende pneumatische Ventileinrichtung (300) über ein Auswahlventil (310) den Vorsteueranschluss (240.1) selbstständig mit der Zuführleitung (86) oder der Hauptleitung (60) verbindet derart, dass die Leitung (86, 60), in welcher der relativ höhere Druck herrscht, mit dem Vorsteueranschluss (240.1) verbunden wird und insbesondere die Leitung (86, 60), in welcher der relativ niedrigere Druck herrscht, zum Vorsteueranschluss (240.1) gesperrt wird.

10. Fahrzeug (1000) mit einem pneumatischen System (100) und einer Druckluftversorgungsanlage (10) nach einem der vorherigen Ansprüche 1 bis 8, insbesondere zur Durchführung eines Verfahrens nach Anspruch 9.

## Claims

1. Compressed air supply system (10a, 10b, 10c) for operating a pneumatic installation (90) in a pneumatic system (100a, 100b, 100c) of a vehicle (1000), comprising:
- a compressed-air feed (1);
- a compressed-air connection point (2) to the pneumatic system (90);
- a venting connection point (3) to the environment;
- a pneumatic main line (60) between the compressed-air feed (1) and the compressed-air connection point (2), which comprises an air dryer (61);
- a venting valve (240) arranged on the pneumatic main line (60) and configured as a pilot valve, having a pilot connection point (240.1),
- a compressor (21) having at least one compressor stage (21.1, 21.2),
- in addition to the pneumatic main line (60), a pilot valve (34) and a pneumatic pilot channel (32) that pneumatically connects the pilot valve (34) to the pilot connection point (240.1) of the venting valve (240),
wherein
- a pressure-holding pneumatic valve device (300a, 300b, 300c) is connected to the pilot connection point (240.1), which is designed to provide a control pressure (PS) for the pilot connection point (240.1),
- in particular independently of a pressure in the pneumatic main line (60) during venting of the pneumatic system (100a, 100b, 100c), and
- the pressure-holding pneumatic valve device (300) can be pneumatically connected to a pressure accumulator (120) via a feed line (86),
**characterized in that**
- the pressure-holding pneumatic valve device (300) has a selection valve (310) for independent connection of the pilot connection point (240.1) in a first operating position (BS1) to the feed line (86) and in a second operating position (BS2) to the main line (60) such that the line (86, 60), in which the relatively higher pressure prevails, is connected to the pilot connection point (240.1) and the line (86, 60) in which the relatively lower pressure prevails is blocked from the pilot connection point (240.1).

2. The compressed-air supply system (10) according to claim 1, **characterized in that** the feed line (86) can be pneumatically connected to the compressor (21) for charging the compressor (21).

3. The compressed-air supply system (10) according to claim 1 or 2, **characterized in that** the selection valve (310) is designed as a shuttle valve (311).

4. The compressed-air supply system (10) according to any of claims 1 to 3, **characterized in that** the selection valve (310) has an, in particular, adjustable preferred position (VS) such that in the event of equal pressures (P1, P2) at the first inlet (A1) and at the second inlet (A2) of the selection valve (310) the inlet (A1, A2) at the preferred position (VS) is connected to the outlet (B1) of the selection valve (310), and in particular the other inlet (A1, A2) is blocked.

5. The compressed-air supply system (10) according to claim 4, **characterized in that** the selection valve (310) has a spring (310.1) for predefining a preferred position (VS).

6. The compressed-air supply system (10) according to any of claims 1 to 5, **characterized in that** the compressor (21) has a first, low-pressure compressor stage (21.1) and a second, high-pressure compressor stage (21.2).

7. The compressed-air supply system (10) according to any of claims 1 to 6, **characterized in that** the feed line (86) can be pneumatically connected to the compressor (21), in particular the inlet of the high-pressure compressor stage (21.2), via a charging line (88) for charging the compressor (21) .

8. The compressed-air supply system (10a, 10b, 10c) according to any of claims 1 to 7, **characterized in that** the pressure-holding pneumatic valve device (300a, 300b, 300c) is completely or partially integrated into the compressed-air supply system (10a, 10b, 10c), in particular forming a structural unit with said compressed-air supply system.

9. A method for operating a compressed-air supply system (10a, 10b, 10c) according to any of claims 1 to 8, wherein the compressed-air supply system (10a, 10b, 10c) is used to operation a pneumatic installation (90) in a pneumatic system (100a, 100b, 100c) of a vehicle (1000) and has a pressure-holding pneumatic valve device (300a, 300b, 300c), comprising the steps:
- compression of compressed air,
- supplying a pneumatic system (100a, 100b, 100c), in particular of the pneumatic installation (90) and/or of a pressure accumulator (120) and/or a gallery (95) with compressed air, operation of the pneumatic installation (90),
- venting the pneumatic system (100a, 100b, 100c) via a venting valve (240) designed as a pilot valve, having a pilot connection point (240.1),
wherein
- a pressure-holding pneumatic valve device (300a, 300b, 300c) connected to the pilot connection point (240.1) keeps the pilot connection point (240.1) under control pressure,
- in particular independently of a pressure in the pneumatic main line (60) during venting of the pneumatic system (100a, 100b, 100c),
- the pressure-holding pneumatic valve device (300) can be pneumatically connected to a pressure accumulator (120) via a feed line (86),
- the pressure-holding pneumatic valve device (300) independently connects the pilot connection point (240.1) to the feed line (86) or the main line (60) via a selection valve (310) such that the line (86, 60) in which the relatively higher pressure prevails is connected to the pilot connection point (240.1) and in particular the line (86, 60) in which the relatively lower pressure prevails, is blocked from the pilot connection point (240.1).

10. A vehicle (1000) having a pneumatic system (100) and a compressed-air supply system (10) according to any of the preceding claims 1 to 8, in particular for carrying out a method according to claim 9.

## Revendications

1. Installation d'alimentation en air comprimé (10a, 10b, 10c) destinée à faire fonctionner une installation pneumatique (90) dans un système pneumatique (100a, 100b, 100c) d'un véhicule (1000), qui présente :
- une amenée d'air comprimé (1) ;
- un raccord d'air comprimé (2) vers l'installation pneumatique (90) ;
- un raccord de purge (3) vers l'environnement ;
- une conduite principale (60) pneumatique entre l'amenée d'air comprimé (1) et le raccord d'air comprimé (2), qui présente un dessiccateur d'air (61) ;
- une valve de purge (240) conçue en tant que valve pilote et agencée sur la conduite principale (60) pneumatique, avec un raccord de pilotage (240.1),
- un compresseur (21) qui présente au moins un étage de compresseur (21.1, 21.2),
- en plus de la conduite principale (60) pneumatique, une valve pilote (34) et un canal de pilotage (32) pneumatique qui relie la valve pilote (34) au raccord de pilotage (240.1) de la valve de purge (240),
dans lequel
- un équipement de valve (300a, 300b, 300c) pneumatique de maintien de la pression est raccordé au raccord de pilotage (240.1), lequel équipement de valve est conçu pour fournir une pression de commande (PS) pour le raccord de pilotage (240.1),
- en particulier indépendamment d'une pression dans la conduite principale (60) pneumatique pendant une purge du système pneumatique (100a, 100b, 100c), et
- l'équipement de valve (300) pneumatique de maintien de la pression peut être pneumatiquement relié à un accumulateur de pression (120) via une conduite d'amenée (86),
**caractérisé en ce que**
- l'équipement de valve (300) pneumatique de maintien de la pression présente une valve de programmation (310) pour relier de façon autonome le raccord de pilotage (240.1) dans une première position de fonctionnement (BS1) à la conduite d'amenée (86) et dans une seconde position de fonctionnement (BS2) à la conduite principale (60), de sorte que la conduite (86, 60) dans laquelle règne la pression relativement plus élevée soit reliée au raccord de pilotage (240.1) et la conduite (86, 60) dans laquelle règne la pression relativement plus basse soit fermée vers le raccord de pilotage (240.1).

2. Installation d'alimentation en air comprimé (10) selon la revendication 1, **caractérisée en ce que** la conduite d'amenée (86) peut être pneumatiquement reliée au compresseur (21) pour une suralimentation du compresseur (21).

3. Installation d'alimentation en air comprimé (10) selon la revendication 1 ou 2, **caractérisée en ce que** la valve de programmation (310) est conçue en tant que sélecteur de circuit (311).

4. Installation d'alimentation en air comprimé (10) selon l'une des revendications 1 à 3, **caractérisée en ce que** la valve de programmation (310) présente une position privilégiée (VS), en particulier réglable, de sorte que sous des pressions identiques (P1, P2) au niveau de la première entrée (A1) et de la seconde entrée (A2) de la valve de programmation (310) l'entrée (A1, A2) au niveau de la position privilégiée (VS) soit reliée à la sortie (B1) de la valve de programmation (310), et en particulier l'autre entrée (A1, A2) soit fermée.

5. Installation d'alimentation en air comprimé (10) selon la revendication 4, **caractérisée en ce que** la valve de programmation (310) présente un ressort (310.1) pour prédéfinir une position privilégiée (VS).

6. Installation d'alimentation en air comprimé (10) selon l'une des revendications 1 à 5, **caractérisée en ce que** le compresseur (21) présente un premier étage de compresseur à basse pression (21.1) et un second étage de compresseur à haute pression (21.2).

7. Installation d'alimentation en air comprimé (10) selon l'une des revendications 1 à 6, **caractérisée en ce que** la conduite d'amenée (86) peut être pneumatiquement reliée au compresseur (21), en particulier à l'entrée du second étage de compresseur à haute pression (21.2), via une conduite de suralimentation (88) pour une suralimentation du compresseur (21).

8. Installation d'alimentation en air comprimé (10a, 10b, 10c) selon l'une des revendications 1 à 7, **caractérisée en ce que** l'équipement de valve (300a, 300b, 300c) pneumatique de maintien de la pression est entièrement ou partiellement intégré jusque dans l'installation d'alimentation en air comprimé (10a, 10b, 10c), en particulier forme une unité structurale avec celle-ci.

9. Procédé destiné à faire fonctionner une installation d'alimentation en air comprimé (10a, 10b, 10c) selon l'une des revendications 1 à 8, dans lequel l'installation d'alimentation en air comprimé (10a, 10b, 10c) est utilisé pour faire fonctionner une installation pneumatique (90) dans un système pneumatique (100a, 100b, 100c) d'un véhicule (1000) et présente un équipement de valve (300a, 300b, 300c) pneumatique de maintien de la pression, qui présente les étapes de :
- compression d'un air comprimé,
- alimentation du système pneumatique (100a, 100b, 100c), en particulier de l'installation pneumatique (90) et/ou d'un accumulateur de pression (120) et/ou d'une galerie (95) avec un air comprimé, fonctionnement de l'installation pneumatique (90),
- purge du système pneumatique (100a, 100b, 100c) via une valve de purge (240) conçue en tant que valve pilote, avec un raccord de pilotage (240.1),
dans lequel
- un équipement de valve (300a, 300b, 300c) pneumatique de maintien de la pression raccordé au raccord de pilotage (240.1) maintient le raccord de pilotage (240.1) sous pression de commande,
- en particulier indépendamment d'une pression dans la conduite principale (60) pneumatique pendant une purge du système pneumatique (100a, 100b, 100c),
- l'équipement de valve (300) pneumatique de maintien de la pression peut être pneumatiquement relié à un accumulateur de pression (120) via une conduite d'amenée (86),
- l'équipement de valve (300) pneumatique de maintien de la pression relie de façon autonome le raccord de pilotage (240.1) à la conduite d'amenée (86) ou à la conduite principale (60) via une valve de programmation (310), de sorte que la conduite (86, 60) dans laquelle règne la pression relativement plus élevée soit reliée au raccord de pilotage (240.1) et en particulier la conduite (86, 60) dans laquelle règne la pression relativement plus basse soit fermée vers le raccord de pilotage (240.1).

10. Véhicule (1000) avec un système pneumatique (100) et une installation d'alimentation en air comprimé (10) selon l'une des revendications 1 à 8, en particulier pour réaliser un procédé selon la revendication 9.
